# EUROPEAN PATENT SPECIFICATION

(11) **EP 2 708 064 B1**
(45) Date of publication and mention of the grant of the patent: **07.08.2019**
(21) Application number: 11805262.0
(22) Date of filing: 15.12.2011
(51) Int. Cl.: H04W 36/00, H04W 36/08, H04W 8/26, H04W 84/00, H04W 84/04

(54) **NEIGHBOR MANAGEMENT FOR MOBILE RELAY NODES**
NACHBARZELLENVERWALTUNG FÜR MOBILE RELAISKNOTEN
GESTION DE CELLULES VOISINES POUR DES NOEUDS RELAIS MOBILES

(30) Priority: 13.05.2011 US 201161486027 P
(43) Date of publication of application: 19.03.2014
(73) Proprietor: Telefonaktiebolaget LM Ericsson (publ), 164 83 Stockholm (SE)
(72) Inventor: GUNNARSSON, Fredrik, S-587 50 Linköping (SE); TEYEB, Oumer, S-113 28 Stockholm (SE); MILDH, Gunnar, S-192 55 Sollentuna (SE); ÖSTERGAARD, Jessica, SE-118 64 Stockholm (SE)
(74) Representative: Brann AB
(86) International application number: PCT/SE2011/051516
(87) International publication number: WO 2012/158086

(56) References cited:
- EP-A1- 1 959 701
- US-A1- 2010 061 339
- TEYEB O ET AL: "Handover Framework for Relay Enhanced LTE Networks", COMMUNICATIONS WORKSHOPS, 2009. ICC WORKSHOPS 2009. IEEE INTERNATIONAL CONFERENCE ON, IEEE, PISCATAWAY, NJ, USA, 14 June 2009 (2009-06-14), pages 1-5, XP031515443, ISBN: 978-1-4244-3437-4

## Description

This application claims priority under 35 U.S.C. § 119(e) from U.S. Publication Serial no. US 2012-0329461 A1, which was published on November 22, 2012 and was entitled "Optimized Handover and Neighbor Management for Mobile Relays."

### TECHNICAL FIELD

The present invention generally relates to updating neighbor cells about a donor base station's serving of a mobile cell, and particularly relates to limiting the cells that the donor base station notifies to those that currently neighbor both the donor cell and the mobile cell.

### BACKGROUND

The 3rd-Generation Partnership Project (3GPP) is standardizing the Long Term Evolution (LTE) Advanced radio access technology. Cells are identified in an LTE-Advanced system, at least in part, using a Physical Cell Identity (PCI) that is not globally unique in the system. In fact, only 504 different PCIs exist in the system. Limiting the number of PCIs simplifies the cell searching process of user equipments (UEs), but inevitably leads to reuse of the same PCIs in different cells.

One complication that results from PCI reuse is termed PCI confusion. PCI confusion arises when a UE in a serving cell reports neighbor cell signal measurements to the serving base station (called the serving evolved NodeB, eNB, in LTE terminology).The UE associates reported signal measurements with the neighbor cells on which they have been performed by including the PCIs of those neighbor cells in the report. If two of the neighbor cells have the same PCI, the report's association between signal measurements and neighbor cells is ambiguous. This proves particularly problematic in the case where the serving eNB uses those measurements for handover of the UE to one of the neighbor cells, because the serving eNB may inadvertently hand over the UE to the wrong neighbor cell and thereby cause radio link failure.

In an effort to avoid these problems, cells in the LTE-Advanced system are also identified by a globally unique identifier referred to as a Cell Global Identity (CGI). When PCI confusion occurs in a UE's measurement report, the serving eNB can instruct the UE to acquire the CGI of the problematic neighbor cell from system information broadcast by the cell. This CGI will resolve the PCI confusion at the serving eNB. However, the UE may have to briefly interrupt its transmissions in order to acquire the CGI.

eNBs in an LTE-Advanced system thus store neighbor cell information within so-called neighbor relation tables (NRTs). Each NRT includes, among other things, a mapping between a neighbor cell's PCI and CGI. If an eNB receives a measurement report that causes PCI confusion with respect to a neighbor cell for which the eNB has a stored NRT, the eNB can resolve the PCI confusion by referencing the NRT rather than by having the UE acquire the neighbor cell's CGI.

An eNB must also reference an NRT for certain types of signaling in an LTE-Advanced system. Signaling between eNBs via a Mobility Management Entity (MME), for example, requires identifying cells with their CGIs because the MME routes messages based on part of those CGIs. Further, handover messages sent over an X2 interface between eNBs (called X2 handover request messages), and handover messages sent over an S1 interface between an eNB and a MME (called S1 handover required messages), also require identifying cells with their CGIs. Still further, an eNB can use a target cell's CGI to recover the target eNB's IP address and establish an X2 interface to that target eNB.

A serving eNB automatically populates its NRTs by requesting reports from served UEs that are located at different spots near the coverage limits of the serving cell and that thereby border different neighboring cells. Upon such request, the served UEs decode and report the CGIs of the different neighboring cells. This so-called UE Automatic Neighbor Relations (ANR) process takes considerable time in order to acquire the CGIs of all neighboring cells.

The fact that the UE ANR process takes time introduces complexities to systems that utilize relay nodes (RNs). From a radio propagation perspective, a relay node (RN) is positioned between a donor eNB and one or more UEs. An RN connects to the donor eNB using the same, standard radio link used by ordinary UEs. The RN then provides radio access to UEs, effectively emulating an eNB from the perspective of the UEs, and uses its radio link to the donor eNB as backhaul transport for UE data. As part of this emulation process, a cell provided by an RN (i.e., an RN cell) appears to a UE as a separate cell that is distinct from the cell provided by the donor eNB (i.e., the donor cell). An RN cell, for example, has its own PCI. An RN may also maintain and populate its own NRTs in a manner similar to that for eNBs.

Heretofore, RNs have remained statically fixed in a particular location, just like eNBs, so the delay involved in populating the NRTs using UE ANR has not introduced new challenges. However, new challenges are in fact introduced by recent proposals to mobilize RNs so that they effectively roam about the system like UEs.

Specifically, mobile RNs are to be installed on or inside of trains, buses, and other moving vehicles. UEs travelling in such a vehicle connect to the mobile RN rather than an eNB. Accordingly, instead of having to handover from eNB to eNB as the vehicle moves, each UE can remain connected to the mobile RN. The only eNB-to-eNB handover that need take place is of the mobile RN, which can be accomplished in a manner similar to that of UEs. Handover of just the mobile RN, rather than multiple individual UEs, optimizes radio signaling and reduces handover failures.

However, the transitory nature of a mobile RN inherently limits the amount of time that the RN has to populate its NRTs using UE ANR, since the mobile RN's neighbor cells vary as the RN moves. If the mobile RN does not have enough time to complete its NRTs, a likely scenario in many use cases, the RN will have to request that a UE read a neighboring cell's CGI in order to resolve PCI confusion from a UE's measurement report. In addition to the disadvantages mentioned above, that in turn delays any handover of the UE that may be made based on the report, such as a handover from the mobile RN to an eNB once the UE's user disembarks from the vehicle to which the mobile RN is attached. Such delay is particularly unacceptable in this context because the radio link between the UE and the mobile RN may deteriorate quickly once the vehicle moves away from the UE.

The transitory nature of a mobile RN also increases the risk of ping-pong handovers of UEs to and from the mobile RN. This risk is especially significant in the context of a public transportation system, because the mobile RN will often appear as a particularly attractive candidate for handover when it arrives at a public transportation station or stop.

Still further, the transitory nature of a mobile RN greatly increases the control signaling occurring in the system. According to current standards, when a donor base station begins serving the mobile RN, the base station notifies all of its neighbor cells that it is serving the mobile RN. In LTE-Advanced, this entails sending a separate eNB Configuration Update message to each neighbor cell. Thus, as the mobile RN hands over from donor base station to donor base station, eNB Configuration Update messages flood the system.

EP1959701 (A1) concerns a method and a system for transferring an ongoing communication in which a mobile terminal is involved between a first and a second base stations of a wireless cellular telecommunication network, one of the base stations being located in a moving conveyance. The first base station: - obtains an information indicating that the first base station will become neighbour of the second base station, - identifies a mobile terminal which is currently under communication with a remote telecommunication device through the first base station, - transfers a message to the second base station requesting the second base station to prepare resources enabling the continuation of the communication through the second base station, - obtains an information indicating that the first base station is neighbour of the second base station, - transfers the ongoing communication in which the mobile terminal is involved to the second base station.

US2010061339 (A1) provides a handover method by a mobile relay station (MRS) or base station (BS) so as to effectively perform a handover of the MRS and mobile stations (MSs) in an environment in which data is communicated through a relay of the MRS. It is possible to improve the efficiency of the handover by allowing handovers of the MRS and MSs to which the MRS relays to be initiated by the MRS or BS.

EYEB O ET AL, "Handover Framework for Relay Enhanced LTE Networks", COMMUNICATIONS WORKSHOPS, 2009. ICC WORKSHOPS 2009. IEEE INTERNATIONAL CONFERENCE ON, IEEE, PISCATAWAY, NJ, USA, (20090614), ISBN 978-1-4244-3437-4, discloses that relaying is one of the proposed technologies for future releases of UTRAN long term evolution (LTE) networks. Introducing relaying is expected to increase the coverage and capacity of LTE networks. In order to enable relaying, the architecture, protocol and radio resource management procedures of LTE, such as handover, have to be modified. A user can be handed over not only between two base stations, but also between relays and base stations, and between two relays. In this paper, we extend the LTE release 8 handover mechanisms so that it can accommodate these new handover functionalities in a flexible manner.

### SUMMARY

One or more examples herein advantageously limit the cells that a donor base station notifies about its serving of a mobile cell to those cells that currently neighbor both the donor cell and the mobile cell. In doing so, the examples recognize that reductions in control signaling resulting from such limited notification causes little, if any, degradation in performance, since cells that are not notified will not likely be candidates for handover of mobile terminals to or from the mobile cell.

In more detail, a donor base station herein receives identifying information that identifies one or more cells currently neighboring a mobile cell provided by a mobile relay node. The donor base station then determines, based on the identifying information, a subset of cells that neighbor both the mobile cell and a donor cell served by the donor base station. Having determined this subset, the donor base station sends an update message (e.g., an eNB Configuration Update message) to the cells in the subset indicating that the donor base station 20 is serving the mobile cell.

The identifying information may include non-unique identifiers (e.g., PCIs) of the cells currently neighboring the mobile relay node, and may be received by the donor base station in any number of ways. As one example, the donor base station may be targeted for handover of the mobile relay node and receive the identifying information in conjunction with the handover. In some examples, therefore, the donor base station receives the identifying information from the mobile relay node immediately upon completion of the handover process, e.g., in an X2 Setup Request message. In other examples, the donor base station receives the identifying
information from the source donor base station as an actual part of the handover process, e.g., in a handover preparation message.

In some embodiments, a donor base station not only limits the cells it notifies about its serving of a particular cell, but it also helps prevent ping-pong handovers of mobile terminals to and from the mobile relay node. Specifically, in generating the update message to inform the determined subset about the serving of a particular cell, the donor base station generates the update message to indicate that the particular cell is a mobile cell provided by a mobile relay node. The donor base station may, for instance, set an explicit indicator in the update message, or include in the update message an identifier for the served cell that has been reserved specifically for mobile cells. Regardless, the cells in the determined subset can then account for the transitory nature of the mobile cell in determining whether to handover a mobile terminal to that cell.

In this regard, a base station receives the update message indicating that a neighboring base station is serving a particular cell, where the received update message comprises an identifier that identifies the particular cell. Further, the base station controls handover to or from the particular cell. If the identifier identifies the particular cell as a fixed cell, the base station controls said handover by performing the handover when signal measurements for the handover meet a defined signal measurement threshold for one threshold amount of time, and if the identifier identifies the particular cell as a mobile cell, the base station controls said handover by performing the handover when the signal measurements for the handover meet the defined signal measurement threshold for a different threshold amount of time that is greater than the one threshold amount of time. In some embodiments, this entails conditioning handover to or from the particular cell on signal measurements for the handover meeting the defined signal measurement threshold for the different threshold amount of time, where at least the different threshold amount of time is specific to mobile cells.

Of course, the present invention is not limited to the above features and advantages. Indeed, those skilled in the art will recognize additional features and advantages upon reading the following detailed description, and upon viewing the accompanying drawings

The invention is defined by the method and the base station of the independent claims. In the following, parts of the description and drawings referring to embodiments which are not covered by the claims are not presented as embodiments of the invention, but as examples useful for understanding the invention.

### BRIEF DESCRIPTION OF THE DRAWINGS

Figure 1 is a block diagram of a wireless communication system that includes one or more base stations configured according to one or more embodiments.
Figure 2 is a logic flow diagram of a method implemented by a donor base station according to one or more examples.
Figures 3-4 are signaling diagrams that illustrate signaling between a mobile relay node, a source donor base station, and a target donor base station according to different examples.
Figure 5 is a logic flow diagram of a method implemented by a base station according to one or more embodiments.
Figure 6 is a block diagram of a donor base station configured to implement any of the methods in Figures 2 or 5.
Figures 7 and 8 are block diagrams of different base station control circuits configured to implement the methods in Figures 2 and 5, respectively.

### DETAILED DESCRIPTION

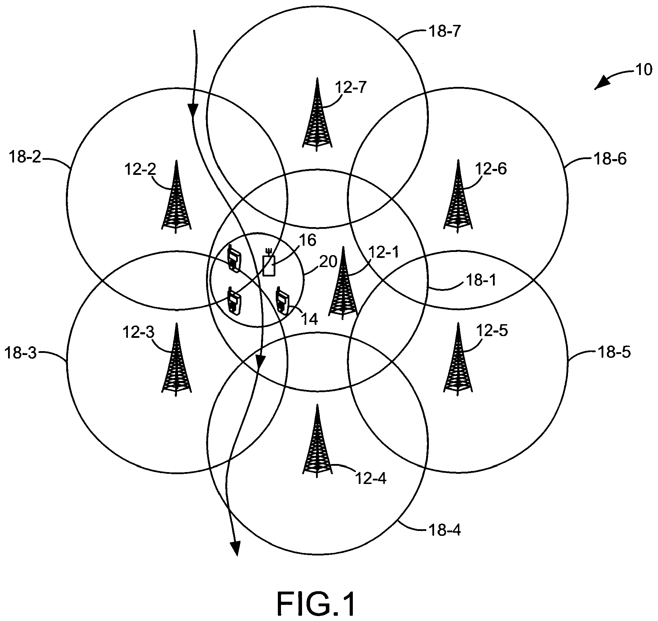

Figure 1 depicts a wireless communication system 10 configured to support mobile relay services. The system 10 includes a plurality of base stations 12, one or more mobile terminals 14, and a mobile relay node (RN) 16.

Each base station 12 serves one or more 'fixed' cells 18, at least in the sense that each base station 12 remains fixed at the same geographic location. Conversely, the mobile RN 16 serves its own 'mobile' cell 20, which moves with the mobile RN 16. This mobile cell 20 has a relatively smaller coverage area than those of the 'fixed' cells 18.

In that regard, the mobile RN 16 connects to one of the base stations 12 (referred to as a donor base station) using the same, standard radio link used by terminals 14. The mobile RN 16 then provides radio access to those mobile terminals 14 within the coverage area of the mobile cell 20, effectively emulating a base station 12, and uses its radio link to the donor base station as backhaul transport for terminal data. The mobile RN 16 thereby relays communications between the donor base station and mobile terminals 14.

As the mobile RN 16 moves about the system 10, mobile terminals 14 that remain in the coverage area of the mobile cell 20 remain stably connected to the mobile RN 16. The mobile RN 16, by contrast, hands over from donor base station to donor base station (i.e., from donor cell to donor cell). The donor base station currently serving the mobile cell 20 thus changes as the mobile RN 16 moves, as does the cells 18 that currently neighbor the mobile cell 20.

One or more examples herein advantageously limit the cells 18 that a donor base station 12 notifies about its serving of the mobile cell 20 to those cells that currently neighbor the mobile cell 20. In doing so, the examples recognize that reductions in control signaling resulting from such limited notification causes little, if any, degradation in performance, since cells 18 that are not notified will not likely be candidates for handover of mobile terminals 14 to or from the mobile cell 20.

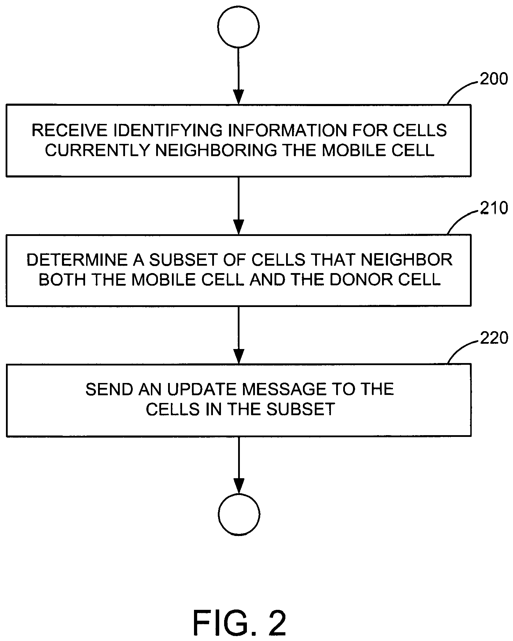

Figure 2 illustrates processing performed by a donor base station 12 for realization of these examples. As shown in Figure 2, processing at a donor base station includes receiving identifying information that identifies one or more cells 18 currently neighboring the mobile cell 20 (Block 200). Processing then includes determining, based on the identifying information, a subset of cells 18 that neighbor both the mobile cell 20 and a donor cell 18 served by the donor base station 12 (Block 210). Finally, processing entails sending an update message to the cells 18 in the subset indicating that the donor base station 12 is serving the mobile cell 20 (Block 220).

Consider, for instance, a simplified example where base station 12-1 in Figure 1 serves as the mobile RN's donor base station and performs this processing. Donor base station 12-1 receives identifying information that identifies cells 18-2 and 18-3 as currently neighboring the mobile cell 20. This identifying information may include, for instance, non-unique identifiers
(e.g., PCIs) of those currently neighbor cells 18-2 and 18-3. Regardless, based on this identifying information, the donor base station 12-1 determines a subset of cells 18 that neighbor both the mobile cell 20 and donor cell 18-1. Such may entail, for instance, selecting from a set of cells 18-2, 18-3,... 18-7 that neighbor the donor cell 18-1 a subset of cells 18-2 and 18-3 that also neighbor the mobile cell 20. The donor base station 12-1 then sends an update message to cells 18-2 and 18-3 in the subset indicating that the donor base station 12-1 is serving the mobile cell 20. In this regard, the donor base station 12-1 selectively sends the update message to only the cells 18-2 and 18-3 in the subset, and thereby refrains from sending the update message to cells 18-4, 18-5, 18-6, and 18-7 not included in the subset.

Selectively sending the update message to only cells in the subset proves particularly advantageous in LTE-Advanced embodiments, where update messages sent to cells 18 are sent as multiple different messages. Indeed, in such embodiments, an update message may comprise an eNB Configuration Update message according to LTE-Advanced standards, with the mobile cell 20 being included within the Served Cells to Add Information Element (IE). Rather than sending separate eNB Configuration Update messages to each cell 18-2, 18-3,... 18-7 neighboring the donor cell 18-1, the donor base station 12-1 only sends separate eNB Configuration Update messages to cells 18-2 and 18-3 in the determined subset. In doing so, the donor base station 12-1 may identify the mobile cell 20 by a non-unique identifier (e.g., a PCI) or a unique identifier (eg., a CGI).

Regardless, a donor base station 12 performing the processing of Figure 2 may receive the identifying information in any number of ways. As one example, the donor base station 12 may be targeted for handover of the mobile RN 16 and receive the identifying information in conjunction with the handover. In some examples, therefore, the donor base station 12 receives the identifying information from the mobile RN 16 immediately upon completion of the handover process. In other examples, the donor base station 12 receives the identifying information from the source donor base station 12 as an actual part of the handover process.

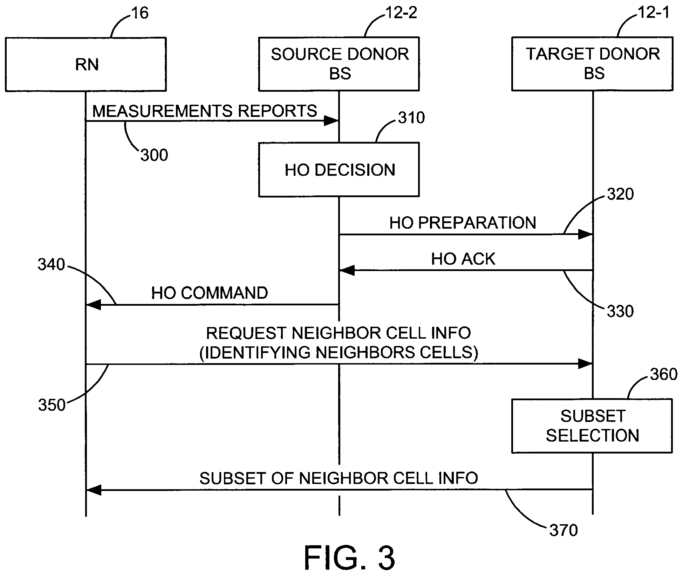

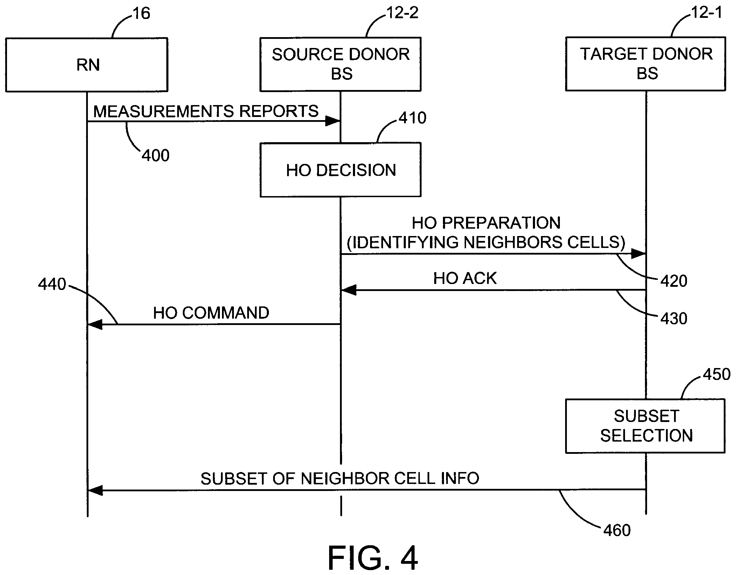

Figures 3 and 4 illustrate examples of these different scenarios in the context of examples where the donor base station 12 also advantageously provides the mobile RN 16 with complete and valid neighbor cell information. Broadly described, the donor base station 12 in these examples provides the mobile RN 16 with neighbor cell information (e.g., PCIs and CGIs of neighbor cells) so that the mobile RN 16 need not command its served mobile terminals 14 to acquire that information. In doing so, the donor base station 12 provides the mobile RN 16 with neighbor cell information that strictly pertains to cells 18 that neighbor the mobile cell 20, rather than generally pertaining to cells 18 that neighbor the donor cell 18.

In this context, Figure 3 illustrates examples where the donor base station 12 receives identifying information from the mobile RN 16 upon completion of the handover process. As shown in Figure 3, the mobile RN 16 sends a measurement report to a source
donor base station (e.g., base station 12-2) that includes signal measurements for the current donor cell 18-2 and one or more cells 18 that currently neighbor the mobile cell 20 as potential donor cell targets (Step 300). Based on the signal measurements in the report, the source donor base station 12-2 targets one of the reported cells 18 for receiving the mobile RN 16 in handover as the mobile RN's new donor base station (Step 310). In this example, the source donor base station 12-2 targets base station 12-1 for handover. Accordingly, the source donor base station 12-2 sends a handover preparation message to the target donor base station 12-1 (Step 320). Responsive to the target donor base station 12-1 acknowledging or otherwise accepting handover of the mobile RN 16 (Step 330), the source donor base station 12-2 sends a handover command message to the mobile RN 16 (Step 340).

This handover command message directs the mobile RN 16 to hand itself over to the target donor base station 12-1. Responsive to receipt of this handover command message, the mobile RN 16 sends a request to the target donor base station 12-1 for neighbor cell information (Step 350). In LTE-Advanced examples, this request may be an X2 Setup Request message. Regardless, the mobile RN 16 includes in this request the identifying information that identifies cells 18-2 and 18-3 currently neighboring the mobile cell 20. Responsive to receiving such request, the target donor base station 12-1 selects from a set of neighbor cell information stored at the base station 12-1 (pertaining to cells 18-2, 18-3,... 18-7 that neighbor the target cell 18-1) a subset of neighbor cell information that specifically pertains to the mobile RN 16 (i.e., that pertains to cells 18-2 and 18-3 that neighbor the mobile cell 20) (Step 360). Finally, the target donor base station 12-1 returns the selected subset (Step 370).

Having received the identifying information in this way, the target donor base station 12-1 proceeds as described above. That is, the base station 12-1 determines the subset of cells 18-2 and 18-3 that neighbor both the mobile cell 20 and the target cell 18-1, and sends an update message to that subset. The target donor base station 12-1 may do so at any point after receiving the identifying information in the request for neighbor cell information at Step 350, i.e., without regard to the timing of Steps 360 and 370.

Figure 4 by contrast illustrates examples where the target donor base station 12-1 receives the identifying information from the source donor base station 1202 as part of the handover process. Indeed, the source donor base station 12-2 in these examples receives the identifying information from the mobile RN 16 within measurement reports (i.e., at Step 400). The source donor base station 12-2 then determines to handover the mobile RN 16 to the target donor base station 12-1 (Step 410) and sends a handover preparation message to the target donor base station 12-1 that includes the identifying information (Step 420). Processing thereafter proceeds in an analogous manner to that already described in Figure 3, with the target donor base station 12-1 determining the subset of cells 18-2 and 18-3 that neighbor both the mobile cell 20 and the target cell 18-1, and sending an update message to that subset, at any point after receiving the identifying information at Step 420.

In some embodiments, a donor base station 12 not only limits the cells it notifies about its serving of a particular cell, but it also helps prevent ping-pong handovers of mobile terminals 14 to and from the mobile RN 16. Specifically, in generating the update message to inform the determined subset about the serving of a particular cell, the donor base station 12 generates the update message to indicate that the particular cell is a mobile cell 20 provided by a mobile RN 16. This way, as described more fully below, the cells 18 in the determined subset can account for the transitory nature of the mobile cell 20 in determining whether to handover a mobile terminal 14 to that cell 20.

A donor base station 12 may generate the update message to indicate that the served cell is a mobile cell 20 in any number of ways. In some embodiments, the donor base station 12 sets an explicit indicator in the update message to indicate that the served cell is a mobile cell 20 provided by a mobile RN 16. In LTE-Advanced embodiments, for instance, an explicit 'mobile node' flag may be set in an eNB Configuration Update message.

In yet other embodiments, the donor base station 12 indicates the transitory nature of the served cell by including in the update message an identifier for the served cell that has been reserved specifically for mobile cells. In this case, 'fixed' cells 18 served by base stations 12 are identified by one set of identifiers, while mobile cells 20 are identified by a distinct set of identifiers. This way, cells 18 receiving the update message can determine whether the served cell is a fixed cell 18 or a mobile cell 20 simply based on inspection of the cell's identifier. In LTE-Advanced embodiments, for instance, certain PCIs or CGIs are reserved specifically for identifying mobile cells 20.

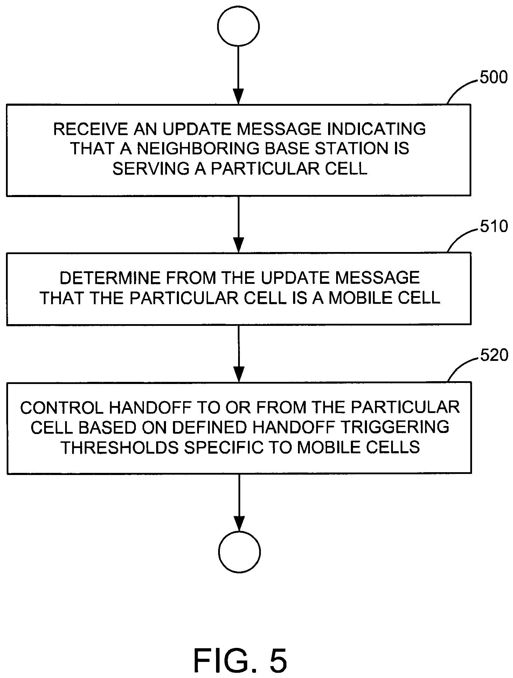

Regardless, base stations 12 that serve the cells 18 in the determined subset receive this update message and account for the transitory nature of the mobile cell 20 in determining whether to handover a mobile terminal 14 to that cell 20. In this regard, a base station 12 (e.g., base station 12-3) performs the processing shown in Figure 5. As shown in Figure 5, processing includes receiving an update message indicating that a neighboring base station (e.g., donor base station 12-1) is serving a particular cell (Block 500). Processing next includes determining from the update message that the particular cell comprises a mobile cell 20 that is being provided by a mobile RN 16 (Block 510). As suggested above, this determination may be realized by the base station 12 recognizing that an identifier included in the update message for the particular cell belongs to a set of identifiers reserved specifically for mobile cells. Alternatively, the determination may be realized by the base station 12 recognizing an explicit indicator in the update message as indicating that the particular cell is a mobile cell. Regardless, responsive to this determination, processing includes controlling handover to or from the particular cell based on one or more defined handover triggering thresholds specific to mobile cells (Block 520).

In some embodiments, the base station 12 controls handover in this way by conditioning handover to or from the particular cell on signal measurements for the handover meeting a defined signal measurement threshold for a defined threshold amount of time. At least the defined threshold amount of time is specific to mobile cells. That is, handovers to or from cells 18 not identified as a mobile cell are performed by the base station 12 if signal measurements for the handover meet the defined signal measurement threshold for one threshold amount of time, but handovers to or from cells identified as mobile cells 20 are performed if signal measurements for the handover meet the defined signal measurement threshold for a different threshold amount of time.

In at least one embodiment, the threshold amount of time defined for mobile cells 20 is greater than the threshold amount of time defined for other cells, e.g., fixed cells 18. This way, handovers to mobile cells 20 require that signal measurements exceed the signal measurement threshold for a longer amount of time than handovers to fixed cells 18. Such operates to deter handover to mobile cells 20 that are likely only going to be available for a short period of time, given the inherently transitory nature of mobile cells 20, and thus prevents the ping-pong of mobile terminals 14 between the base station's cell 18 and the mobile cell 20.

In one scenario, for instance, these embodiments prevent a base station 12 from handing over a terminal 14 of a bystander at a train station to a mobile cell 20 associated with an arriving train, only to be handed back over once the train departs the station a short while later. Of course, because the base station 12 does not know whether the terminal 14 belongs to a bystander or an actual passenger boarding the train, the threshold amount of time for handover should be defined simply to deter rather than prevent handover. Moreover, the signal measurement threshold may be defined to encourage handover of only terminals 14 that are close enough to the train to be deemed likely passengers.

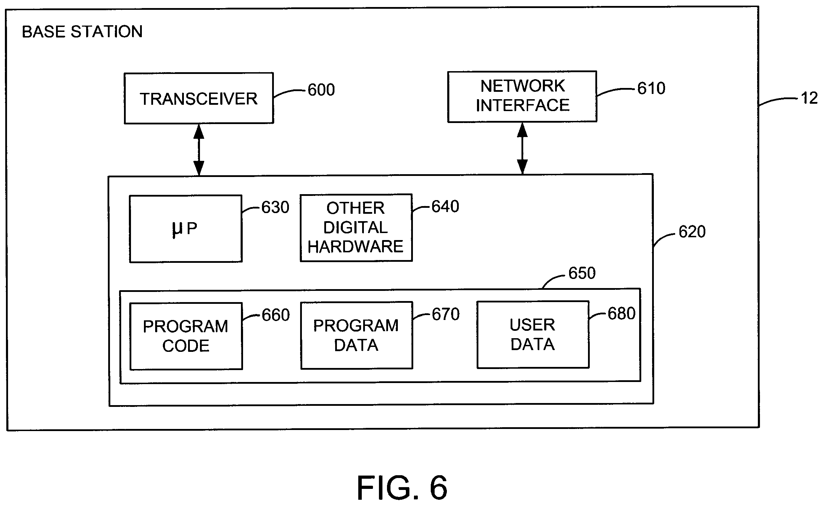

Apparatus configured to carry out the techniques described above are illustrated in Figures 6-8. Figure 6 is a block diagram of a base station 12 configured according to any of the techniques disclosed herein. In particular, the base station 12 may be configured to implement the methods illustrated in Figures 2 or 5, or variants thereof. The base station 12 includes a transceiver circuit 600 and a network interface 610 to other base stations 12 and/or other nodes in the system 10. The transceiver circuit 600, in particular, includes various radio-frequency components (not shown) for sending radio signals to and processing radio signals received from the mobile RN 16. More particularly, the transceiver circuit 600 is configured to convert the received radio signals into digital samples for processing by one or more processing circuits 620. The one or more processing circuits 620 extract data from signals received via transceiver 600 and generate information for transmission via the transceiver 600. In this regard, the transceiver 600 uses known radio processing and signal processing techniques, typically according to one or more telecommunications standards, and is configured to format digital data and condition a radio signal, from that data, for transmission over the air.

The one or more processing circuits 620 comprise one or several microprocessors 630, digital signal processors, and the like, as well as other digital hardware 640 and memory circuit 650. Memory 650, which may comprise one or several types of memory such as read-only memory (ROM), random-access memory, cache memory, flash memory devices, optical storage devices, etc., stores program code 660 for executing one or more telecommunications and/or data communications protocols and for carrying out one or more of the techniques described herein. Memory 650 further stores program data 670, user data 680 received from the mobile RN 16, and also stores various parameters and/or other program data for controlling the operation of the base station 12.

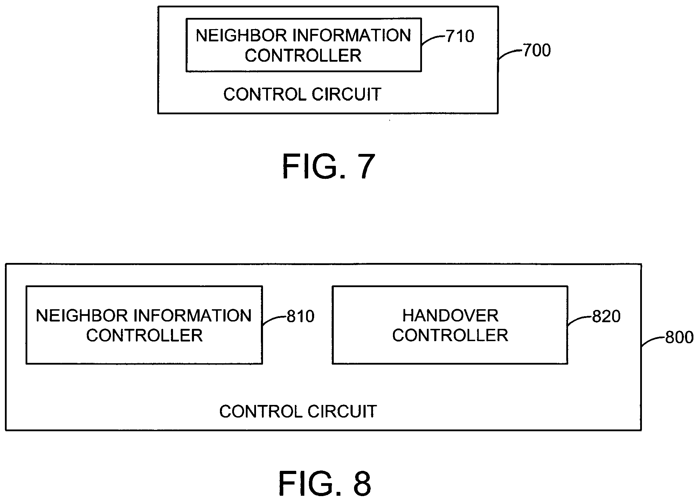

Of course, not all of the steps of the techniques described herein are necessarily performed in a single microprocessor or even in a single module. Thus, Figure 7 presents a more generalized view of a donor base station control circuit 700 configured to carry out the method shown in Figure 2. This donor base station control circuit 700 may have a physical configuration that corresponds directly to processing circuits 620, for example, or may be embodied in two or more modules or units. In either case, control circuit 1700 is configured with a module or sub-circuit to carry out operations in accordance with the method in Figure 2. This unit is pictured in Figure 7 as a neighbor information controller 710. The controller 710 determines identifying information that identifies one or more cells 18 currently neighboring the mobile cell 20. The controller 710 also determines, based on the identifying information, a subset of cells 18 that neighbor both the mobile cell 20 and a donor cell 18 served by the donor base station 12. Finally, the controller 710 sends an update message to the cells in the subset indicated that the donor base station is serving the mobile cell 20.

Figure 8 by contrast presents a more generalized view of a base station control circuit 800 configured to carry out the method shown in Figure 5. This base station control circuit 800 may also have a physical configuration that corresponds directly to processing circuits 1620, for example, or may be embodied in two or more modules or units. In either case, control circuit 800 is configured with two or more modules or sub-circuits to carry out operations in accordance with the method in Figure 5. These units are pictured in Figure 8 as a neighbor information controller 810 and a handover controller 820.

The neighbor information controller 810 receives an update message, via the transceiver 600, indicating that a neighbor base station 12 is serving a particular cell. The controller 810 then determines from the update message that the particular cell comprises a mobile cell 20 that is being provided by a mobile RN 16. Responsive to that determination, the handover controller 820 controls handover to or from the particular cell based on one or more defined handover triggering thresholds specific to mobile cells.

Those skilled in the art will appreciate that the various "circuits" described may refer to a combination of analog and digital circuits, and/or one or more processors configured with software stored in memory and/or firmware stored in memory that, when executed by the one or more processors, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

Those skilled in the art will also appreciate that the above description may have been simplified in a number of respects purely for explanatory purposes. As one example of this, cells that neighbor the mobile cell 20 were conveniently described as being fixed cells 18 that are served by base stations 12. But, those skilled in the art will appreciate that other mobile cells may neighbor the mobile cell 20 as well. Indeed, these other mobile cells may be provided by other mobile RNs in the vicinity of the mobile RN 16, and be served by a different donor base station 12 than the donor base station serving the mobile cell 20. In this case, the donor base station 12 serving the mobile cell 20 may send an update message to not only fixed cells 18 that neighbor the mobile cell 20, but also to other mobile cells that neighbor the mobile cell 20.

## Claims

1. A method implemented by a base station (12-3) in a wireless communication system (10), the method being **characterized by**:
receiving (500) an update message indicating that a neighboring base station (12-1) is serving a particular cell, wherein the received update message comprises an identifier that identifies said particular cell; and
controlling (520) handover to or from said particular cell,
wherein if the identifier identifies said particular cell as a fixed cell (18), said controlling (520) comprises performing the handover when signal measurements for the handover meet a defined signal measurement threshold for one threshold amount of time, and
wherein if the identifier identifies said particular cell as a mobile cell (20), said controlling (520) comprises performing the handover when the signal measurements for the handover meet the defined signal measurement threshold for a different threshold amount of time that is greater than the one threshold amount of time.

2. The method of claim 1, wherein said particular cell is identified as a mobile cell (20) in response to recognizing that the identifier comprised in the received update message for said particular cell, belongs to a set of identifiers reserved specifically for mobile cells (20).

3. The method of claim 1, wherein said particular cell is identified as a mobile cell (20) in response to recognizing an explicit indicator in the received update message as indicating that said particular cell is a mobile cell (20).

4. The method of any of claims 1-3, wherein at least said different threshold amount of time is specific to mobile cells (20).

5. The method of any of claims 1-4, wherein the wireless communication system (10) is a Long Term Evolution, LTE, system, and wherein the received update message is an eNB Configuration Update message.

6. A base station (12-3) in a wireless communication system (10), wherein the base station (12-3) comprises a transceiver (600) and a network interface (610), and wherein the base station (12-3) is **characterized by** one or more processing circuits (620) configured to:
receive an update message indicating that a neighboring base station (12-1) is serving a particular cell, wherein the received update message comprises an identifier that identifies said particular cell; and
control handover to or from said particular cell,
wherein if the identifier identifies said particular cell as a fixed cell (18), the one or more processing circuits (620) are configured to control the handover by performing the handover when signal measurements for the handover meet a defined signal measurement threshold for one threshold amount of time, and
wherein if the identifier identifies said particular cell as a mobile cell (20), the one or more processing circuits (620) are configured to control the handover by performing the handover when the signal measurements for the handover meet the defined signal measurement threshold for a different threshold amount of time that is greater than the one threshold amount of time.

7. The base station (12-3) of claim 6, wherein the one or more processing circuits (620) are further configured to perform the method of any of claims 2-5.

## Patentansprüche

1. Verfahren, das durch eine Basisstation (12-3) in einem drahtlosen Kommunikationssystem (10) implementiert wird, wobei das Verfahren **gekennzeichnet ist durch**:
Empfangen (500) einer Aktualisierungsnachricht, die anzeigt, dass eine benachbarte Basisstation (12-1) eine bestimmte Zelle bedient, wobei die empfangene Aktualisierungsnachricht eine Kennung umfasst, die die bestimmte Zelle identifiziert; und
Steuern (520) der Übergabe an die oder von der bestimmten Zelle,
wobei, wenn die Kennung die bestimmte Zelle als eine feste Zelle (18) identifiziert, das Steuern (520) das Durchführen der Übergabe umfasst, wenn Signalmessungen für die Übergabe für eine Zeitspanne einen definierten Signalmessschwellenwert erreichen, und
wobei, wenn die Kennung die bestimmte Zelle als eine mobile Zelle (20) identifiziert, das Steuern (520) das Durchführen der Übergabe umfasst, wenn die Signalmessungen für die Übergabe den definierten Signalmessschwellenwert für eine unterschiedliche Zeitschwelle, die größer als die eine Zeitschwelle ist, erreichen.

2. Verfahren nach Anspruch 1, wobei die bestimmte Zelle als mobile Zelle (20) als Reaktion auf das Erkennen, dass die Kennung, die in der empfangenen Aktualisierungsnachricht für die bestimmte Zelle enthalten ist, zu einem Satz von Kennungen gehört, die speziell für mobile Zellen (20) vorbehalten sind, identifiziert wird.

3. Verfahren nach Anspruch 1, wobei die bestimmte Zelle als mobile Zelle (20) als Reaktion auf das Erkennen eines expliziten Indikators in der empfangenen Aktualisierungsnachricht als Hinweis darauf, dass die bestimmte Zelle eine mobile Zelle (20) ist, identifiziert wird.

4. Verfahren nach einem der Ansprüche 1-3, wobei mindestens die unterschiedliche Zeitschwelle für mobile Zellen (20) spezifisch ist.

5. Verfahren nach einem der Ansprüche 1-4, wobei das drahtlose Kommunikationssystem (10) ein Long Term Evolution- (LTE) System ist und wobei die empfangene Aktualisierungsnachricht eine eNB-Konfigurationsaktualisierungsnachricht ist.

6. Basisstation (12-3) in einem drahtlosen Kommunikationssystem (10), wobei die Basisstation (12-3) einen Sender-Empfänger (600) und eine Netzwerkschnittstelle (610) umfasst, und wobei die Basisstation (12-3) durch eine oder mehrere Verarbeitungsschaltungen (620) gekennzeichnet ist, die ausgelegt sind zum:
Empfangen einer Aktualisierungsnachricht, die anzeigt, dass eine benachbarte Basisstation (12-1) eine bestimmte Zelle bedient, wobei die empfangene Aktualisierungsnachricht eine Kennung umfasst, die die bestimmte Zelle identifiziert; und
Steuern der Übergabe an die oder von der bestimmten Zelle,
wobei, wenn die Kennung die bestimmte Zelle als eine feste Zelle (18) identifiziert, die eine oder die mehreren Verarbeitungsschaltungen (620) ausgelegt sind, um die Übergabe durch Ausführen der Übergabe zu steuern, wenn Signalmessungen für die Übergabe für eine Zeitspanne einen definierten Signalmessschwellenwert erreichen, und
wobei, wenn die Kennung die bestimmte Zelle als eine mobile Zelle (20) identifiziert, die eine oder die mehreren Verarbeitungsschaltungen (620) ausgelegt sind, um die Übergabe durch Ausführen der Übergabe zu steuern, wenn die Signalmessungen für die Übergabe den definierten Signalmessschwellenwert für eine unterschiedliche Zeitschwelle, die größer als die eine Zeitschwelle ist, erreichen.

7. Basisstation (12-3) nach Anspruch 6, wobei die eine oder die mehreren Verarbeitungsschaltungen (620) ferner ausgelegt sind, um das Verfahren nach einem der Ansprüche 2-5 durchzuführen.

## Revendications

1. Procédé mis en oeuvre par une station de base (12-3) dans un système de communication sans fil (10), le procédé étant **caractérisé par** :
la réception (500) d'un message de mise à jour indiquant qu'une station de base voisine (12-1) dessert une cellule particulière, dans lequel le message de mise à jour reçu comprend un identifiant qui identifie ladite cellule particulière ; et
la commande (520) du transfert vers ou à partir de ladite cellule particulière,
dans lequel, si l'identifiant identifie ladite cellule particulière comme une cellule fixe (18), ladite commande (520) comprend la réalisation du transfert lorsque les mesures de signal pour le transfert satisfont à un seuil de mesure de signal défini pour une quantité de temps seuil, et
dans lequel, si l'identifiant identifie ladite cellule particulière comme une cellule mobile (20), ladite commande (520) comprend la réalisation du transfert lorsque les mesures de signal pour le transfert satisfont au seuil de mesure de signal défini pour une quantité de temps seuil différente qui est supérieure à l'une quantité de temps seuil.

2. Procédé selon la revendication 1, dans lequel ladite cellule particulière est identifiée comme une cellule mobile (20) en réponse à la reconnaissance que l'identifiant compris dans le message de mise à jour reçu pour ladite cellule particulière appartient à un ensemble d'identifiants réservé spécifiquement pour des cellules mobiles (20).

3. Procédé selon la revendication 1, dans lequel ladite cellule particulière est identifiée comme une cellule mobile (20) en réponse à la reconnaissance d'un indicateur explicite dans le message de mise à jour reçu comme indiquant que ladite cellule particulière est une cellule mobile (20).

4. Procédé selon l'une quelconque des revendications 1 à 3, dans lequel au moins ladite quantité de temps seuil différente est spécifique aux cellules mobiles (20).

5. Procédé selon l'une quelconque des revendications 1 à 4, dans lequel le système de communication sans fil (10) est un système d'évolution à long terme (LTE), et dans lequel le message de mise à jour reçu est un message de mise à jour de configuration eNB.

6. Station de base (12-3) dans un système de communication sans fil (10), dans laquelle la station de base (12-3) comprend un émetteur-récepteur (600) et une interface réseau (610), et dans laquelle la station de base (12-3) est **caractérisée par** un ou plusieurs circuits de traitement (620) configuré(s) pour :
recevoir un message de mise à jour indiquant qu'une station de base voisine (12-1) dessert une cellule particulière, dans laquelle le message de mise à jour reçu comprend un identifiant qui identifie ladite cellule particulière ; et
commander le transfert vers ou à partir de la cellule particulière,
dans laquelle, si l'identifiant identifie ladite cellule particulière comme une cellule fixe (18), les un ou plusieurs circuits de traitement (620) sont configurés pour commander le transfert par la réalisation du transfert lorsque les mesures de signal pour le transfert satisfont à un seuil de mesure de signal défini pour une quantité de temps seuil, et
dans laquelle, si l'identifiant identifie ladite cellule particulière comme une cellule mobile (20), les un ou plusieurs circuits de traitement (620) sont configurés pour commander le transfert par la réalisation du transfert lorsque les mesures de signal pour le transfert satisfont au seuil de mesure de signal défini pour une quantité de temps seuil différente qui est supérieure à l'une quantité de temps seuil.

7. Station de base (12-3) selon la revendication 6, dans laquelle les un ou plusieurs circuits de traitement (620) sont en outre configurés pour exécuter le procédé selon l'une quelconque des revendications 2 à 5.
